# EUROPEAN PATENT SPECIFICATION

(11) **EP 2 809 902 B1**
(45) Date of publication and mention of the grant of the patent: **26.05.2021**
(21) Application number: 13767684.7
(22) Date of filing: 09.01.2013
(51) Int. Cl.: F02C 7/06, F01D 25/16

(54) **GAS TURBINE ENGINE AFT BEARING ARRANGEMENT**
HINTERE LAGERANORDNUNG FÜR EINEN GASTURBINENMOTOR
AGENCEMENT DE PALIER ARRIÈRE DE MOTEUR À TURBINE À GAZ

(30) Priority: 31.01.2012 US 201261593050 P; 02.02.2012 US 201213364502
(43) Date of publication of application: 10.12.2014
(73) Proprietor: Raytheon Technologies Corporation, Farmington, CT 06032 (US)
(72) Inventor: SAVELA, Gregory M., Amston, CT 06231 (US)
(74) Representative: Dehns
(86) International application number: PCT/US2013/020750
(87) International publication number: WO 2013/147977

(56) References cited:
- US-A- 3 722 212
- US-A- 3 823 553
- US-A- 4 483 149
- US-A1- 2006 201 160
- US-A1- 2008 031 727
- US-A1- 2009 031 732
- US-A1- 2012 017 603
- US-B2- 6 846 158
- US-B2- 7 097 413
- 'PART 5: TURBINES' THE JET ENGINE 01 July 1969, pages 39 - 48, XP008174449
- BILL GUNSTON JANE'S AERO-ENGINES 2000, ALEXANDRIA VIRGINIA, pages 365,506 - 511, XP008174443

## Description

### BACKGROUND

This disclosure relates to a bearing arrangement for a gas turbine engine.

A typical jet engine has two or three spools, or shafts, that transmit torque between the turbine and compressor sections of the engine. Each of these spools is typically supported by two bearings. One bearing, for example, a ball bearing, is arranged at a forward end of the spool and is configured to react to both axial and radial loads. Another bearing, for example, a roller bearing or journal bearing is arranged at the aft end of the spool and is configured to react only to radial loads. This bearing arrangement fully constrains the shaft except for rotation, and axial movement of one free end is permitted to accommodate engine axial growth.

A prior art engine having the features of the preamble of claim 1 is shown in US-3,823,553. Further prior art engines are shown in US-3,722,212, US-2006/0201160, , US-6,846,158, US-2012/0017603 and US-2008/0031727.

### SUMMARY

According to the present invention, there is provided a gas turbine engine as claimed in claim 1.

### BRIEF DESCRIPTION OF THE DRAWINGS

The disclosure can be further understood by reference to the following detailed description when considered in connection with the accompanying drawings.
Figure 1 schematically illustrates an example gas turbine engine.
Figure 2 is another schematic view of the gas turbine engine illustrating an example bearing arrangement.
Figure 3 is a more detailed schematic view of an aft bearing arrangement illustrated in Figure 2.

### DETAILED DESCRIPTION

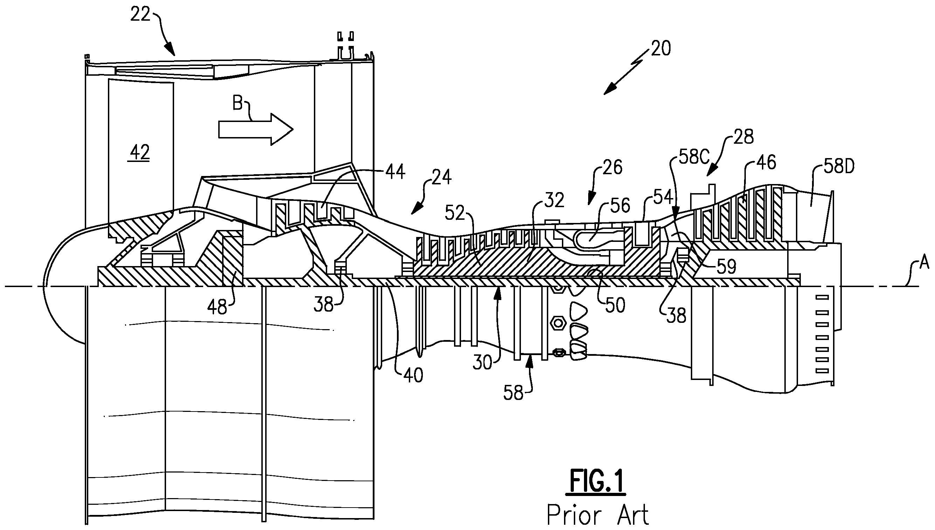

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure or housing 58 via several bearing systems 38. It should be understood that various bearing systems 38 at various locations may alternatively or additionally be provided. The housing 58 includes first, second, third, and fourth housing portions 58A, 58B, 58C, 58D. The third and fourth housing portions 58C, 58D respectively correspond to a mid-turbine frame and a turbine exhaust case.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The mid-turbine frame 58C of the engine static structure 58 is arranged generally between the high pressure turbine 54 and the low pressure turbine 46. The mid-turbine frame 58C supports one or more bearing systems 38 in the turbine section 28. The turbine exhaust case 58D is arranged downstream from the low pressure turbine 46 and may support one or more bearing systems as well. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58C includes airfoils 59 which are in the core airflow path. The turbines 46, 54 rotationally drive the respective low speed spool 30 and high speed spool 32 in response to the expansion.

The engine 20 is, in one example, a high-bypass geared aircraft engine. In a further example, the engine 20 bypass ratio is greater than about six, with an example embodiment being greater than ten, the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten, the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0,5}. The "Low corrected fan tip speed" as disclosed herein according to one non-limiting embodiment is less than about 1150 ft / second (350.5 m/s).

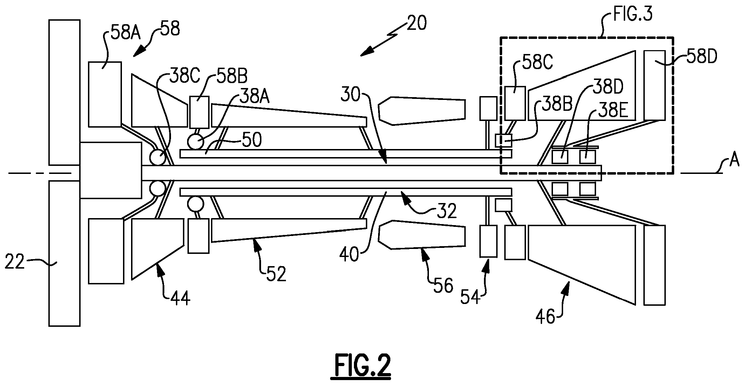

An example bearing arrangement for the gas turbine engine 20 is schematically depicted in Figure 2. The low speed spool 30 extends axially between forward and aft ends, with the aft end extending beyond the high speed spool 32. The high speed spool 32 is supported for rotation by first and second bearings 38A, 38B. In one example, the first bearing 38A is of a type that may react to both axial and radial loads, such as a ball bearing. The second bearing 38B is of a type that reacts to radial loads, such as a roller bearing or a journal bearing. The low speed spool 30 is supported by first, second and third bearings 38C, 38D, 38E. The first bearing 38C is of a type that reacts to both axial and radial loads. The second and third bearings 38D, 38E are of a type that reacts to radial loads. The second and third bearings 38D, 38E support an aft end of the low speed spool 30.

The low speed spool 30 has a higher length/diameter (L/D) ratio than the high speed spool 32. From a rotor dynamics standpoint, a shaft will reach a critical speed of instability at a lower speed as the L/D ratio gets larger. Providing at least two bearings at the aft end of the low speed spool 30 increases the critical speed of the low speed spool 30, which enables higher overall engine speeds and lower weight thereby allowing the engine 20 to be faster and smaller for a given level of thrust.

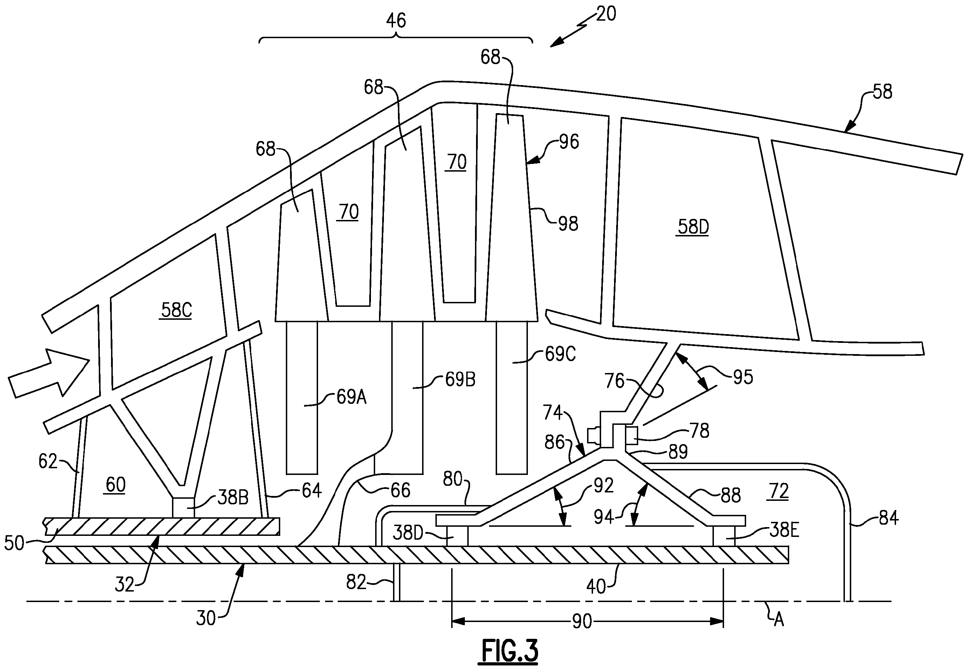

Figure 3 illustrates a more detailed view of the engine 20 shown in Figure 2. The second bearing 38B supporting the high speed spool 32 is arranged within a first bearing compartment 60. The first bearing compartment 60 is provided by first and second walls 62, 64, which are sealed relative to the mid-turbine frame 58C and the high speed spool 32.

The low pressure turbine 46 includes a low pressure turbine rotor hub 66 secured to the low speed spool 30. The low pressure turbine rotor hub 66 supports multiple low pressure turbine blades 68 in one example. Low pressure turbine stator vanes 70 are provided between the low pressure turbine blades 68 and supported by the engine static structure 58. The low pressure turbine rotor hub 66 is canted in an aft direction, which accommodates a second bearing compartment 72. The second and third bearings 38D, 38E are arranged within the second bearing compartment 72, which is provided by first and second walls 80, 82 and a cover 84, for example. The cover 84 is removably secured over the aft end and encloses the second and third bearings 38D, 38E.

In the example, the turbine exhaust case 58D includes a radially rearward canted annular flange 76, which removably supports a hub 74 secured to the flange 76 by fasteners 78. The hub 74 includes first and second hub walls 86, 88 canted toward one another in opposing directions and adjoining one another at an annular apex 89 provided near the flange 76. The first and second hub walls 86, 88 provide an integrated, unitary structure. Each of the first and second hub walls 86, 88 supports one of the second and third bearings 38D, 38E. The aft-canted low pressure turbine rotor hub 66 accommodates at least the second bearing 38D and a portion of the first hub wall 86 is arranged radially beneath the low
pressure turbine 46 such that axial length need not be added to the low speed spool 30. The second bearing 38D is arranged axially forward of an aft side 98 of a last rotor stage 96.

In one example, the second and third bearings 38D, 38E are spaced apart from one another a span 90 that is approximately 4-12 inches (10-30 cm), for example.

The first hub wall 86 is oriented at a first angle 92 of between 30° and 60°, and the second hub wall 88 is oriented at a second angle 94 of between 30° and 60°. The annular flange 76 is oriented relative to the first hub wall 86 at a third angle 95 of between 0° and 30°, for example. In one example, the first angle 92 is about 45° and the third angle 95 is about 0°. The above values are exemplary for one example engine design.

The multiple turbine rotors include first, second and third turbine rotors 69A, 69B, 69C. The third turbine rotor is part of the last rotor stage 96. The first turbine rotor 69A corresponds to a forward-most rotor stage. The second turbine rotor 69B is arranged axially between the first and third rotors 69A, 69C. The low pressure turbine rotor hub 66 is mounted on the low speed spool 30 and is secured to the second turbine hub 69B for supporting the low pressure turbine 46. In one example, the bearing hub 74 includes a moment stiffness of 80,000,000 in-lb/rad (9,144,000 cm-kg/rad), for example, and a lateral stiffness of 5,000,000 lb/in (886,000 kg/cm).

Although example embodiments have been disclosed, a worker of ordinary skill in this art would recognize that certain modifications would come within the scope of the claims. For that reason, the following claims should be studied to determine their true scope and content.

## Claims

1. A gas turbine engine (20) comprising:
a combustor (56);
high and low pressure turbines (54, 46) downstream from the combustor (56);
first and second spools (30, 32) coaxial with one another about an engine central longitudinal axis (A), the first spool (30) arranged within the second spool (32) and extending between forward and aft ends, the aft end extending axially beyond the second spool (32) and supporting the low pressure turbine (46), wherein the high pressure turbine (54) is mounted on the second spool (32), and the low pressure turbine (46) is mounted on the first spool;
a housing portion (58D) arranged downstream from the low pressure turbine (46); and
first and second bearings (38D, 38E) mounted to the aft end of the first spool (30) and supported by the housing portion (58D), wherein the housing portion (58D) is a turbine exhaust case and includes a bearing hub (74) removably secured to an annular flange (76), the first and second bearings (38D, 38E) are mounted to the bearing hub (74), the first and second bearings (38D, 38E) are arranged in a bearing compartment (72) aft of the second spool (32), the low pressure turbine (46) includes multiple turbine rotors (69A, 69B, 69C), the first bearing (38D) is arranged axially forward of an aft side (98) of a last rotor stage (96) of the low pressure turbine (46), the bearing hub (74) includes first and second hub walls (86, 88) respectively supporting the first and second bearings (38D, 38E), the first and second hub walls (86, 88) are inclined radially to the first and second bearings (38D, 38E) from an annular apex at which the first and second hub walls (86, 88) are joined near the annular flange (76), and a portion of the first hub wall (86) is arranged radially beneath the low pressure turbine (46),
**characterised in that**:
the first hub wall (86) is oriented at a first angle (92) of between 30° and 60° relative to a line parallel to the longitudinal axis (A);
the second hub wall (88) is oriented at a second angle (94) of between 30° and 60° relative to a line parallel to the longitudinal axis (A); and
the first and second hub walls (86,88) are canted toward one another in opposing directions and provide an integrated, unitary structure.

2. The gas turbine engine (20) according to claim 1, wherein the first and second bearings (38D, 38E) are spaced apart from one another by approximately four to twelve inches (10-30 cm).

3. The gas turbine engine (20) according to claim 1 or 2, wherein the annular flange (76) is oriented relative to the first hub wall (86) at a third angle (95) of between 0° and 30°.

4. The gas turbine engine (20) according to claim 3, wherein the first angle (92) is about 45° and the third angle (95) is about 0°.

5. The gas turbine engine (20) according to any preceding claim, wherein the multiple turbine rotors (69A, 69B, 69C) include first, second and third turbine rotors, the third turbine rotor (69C) corresponding to the last rotor stage (96), the first turbine rotor (69A) corresponding to a forward-most rotor stage, and the second turbine rotor (69B) arranged axially between the first and third rotors, and comprising a low pressure turbine hub (66) mounted on the first spool (30) and secured to the second turbine rotor (69B) for supporting the multiple turbine rotors.

6. The gas turbine engine (20) according to any preceding claim, wherein the first and second bearings (38D, 38E) are roller bearings.

7. The gas turbine engine (20) according to any preceding claim, wherein the first and second angles (92, 94) are each about 45°.

8. The gas turbine engine (20) according to any preceding claim, further comprising a fan (42), wherein the gas turbine engine (20) is a high bypass geared aircraft engine having a bypass ratio of greater than six.

9. The gas turbine engine (20) according to any of claims 1 to 7, further comprising a fan (42), wherein the gas turbine engine (20) includes a low Fan Pressure Ratio of less than 1.45.

10. The gas turbine engine (20) according to any preceding claim, wherein the low pressure turbine (46) has a pressure ratio that is greater than five.

## Patentansprüche

1. Gasturbinentriebwerk (20), umfassend:
eine Brennkammer (56);
eine Hoch- und eine Niederdruckturbine (54, 46) stromabwärts der Brennkammer (56);
eine erste und eine zweite Spule (30, 32), die koaxial zueinander um eine zentrale Längsachse (A) des Triebwerks angeordnet sind, wobei die erste Spule (30) innerhalb der zweiten Spule (32) angeordnet ist und sich zwischen einem vorderen und einem hinteren Ende erstreckt, wobei sich das hintere Ende axial über die zweite Spule (32) hinaus erstreckt und die Niederdruckturbine (46) stützt, wobei die Hochdruckturbine (54) an der zweiten Spule (32) montiert ist und die Niederdruckturbine (46) an der ersten Spule montiert ist; einen Gehäuseabschnitt (58D), der stromabwärts der Niederdruckturbine (46) angeordnet ist; und
ein erstes und ein zweites Lager (38D, 38E), die an dem hinteren Ende der ersten Spule (30) montiert sind und durch den Gehäuseabschnitt (58D) gestützt werden, wobei der Gehäuseabschnitt (58D) ein Turbinenabgasgehäuse ist und eine Lagernabe (74) beinhaltet, die abnehmbar an einem ringförmigen Flansch (76) gesichert ist, wobei das erste und das zweite Lager (38D, 38E) an der Lagernabe (74) montiert sind, wobei das erste und das zweite Lager (38D, 38E) in einer Lagerkammer (72) hinter der zweiten Spule (32) angeordnet sind, wobei die Niederdruckturbine (46) mehrere Turbinenrotoren (69A, 69B, 69C) beinhaltet, wobei das erste Lager (38D) axial vor einer Rückseite (98) einer letzten Rotorstufe (96) der Niederdruckturbine (46) angeordnet ist, wobei die Lagernabe (74) eine erste und eine zweite Nabenwand (86, 88) beinhaltet, die jeweils das erste und das zweite Lager (38D, 38E) stützen, wobei die erste und die zweite Nabenwand (86, 88) radial zu dem ersten und dem zweiten Lager (38D, 38E) von einer ringförmigen Spitze geneigt sind, an der die erste und die zweite Nabenwand (86, 88) nahe dem ringförmigen Flansch (76) miteinander verbunden sind, und wobei ein Abschnitt der ersten Nabenwand (86) radial unterhalb der Niederdruckturbine (46) angeordnet ist,
**dadurch gekennzeichnet, dass**:
die erste Nabenwand (86) in einem ersten Winkel (92) zwischen 30° und 60° relativ zu einer zu der Längsachse (A) parallel verlaufenden Linie ausgerichtet ist;
die zweite Nabenwand (88) in einem zweiten Winkel (94) zwischen 30° und 60° relativ zu einer zu der Längsachse (A) parallel verlaufenden Linie ausgerichtet ist; und
die erste und die zweite Nabenwand (86, 88) zueinander in entgegengesetzten Richtungen gekippt sind und eine integrierte, einheitliche Struktur bereitstellen.

2. Gasturbinentriebwerk (20) nach Anspruch 1, wobei das erste und das zweite Lager (38D, 38E) um annähernd vier bis zwölf Zoll (10-30 cm) voneinander beabstandet sind.

3. Gasturbinentriebwerk (20) nach Anspruch 1 oder 2, wobei der ringförmige Flansch (76) relativ zu der ersten Nabenwand (86) in einem dritten Winkel (95) zwischen 0° und 30° ausgerichtet ist.

4. Gasturbinentriebwerk (20) nach Anspruch 3, wobei der erste Winkel (92) etwa 45° beträgt und der dritte Winkel (95) etwa 0° beträgt.

5. Gasturbinentriebwerk (20) nach einem der vorhergehenden Ansprüche, wobei die mehreren Turbinenrotoren (69A, 69B, 69C) einen ersten, einen zweiten und einen dritten Turbinenrotor beinhalten, wobei der dritte Turbinenrotor (69C) der letzten Rotorstufe (96) entspricht, wobei der erste Turbinenrotor (69A) einer vordersten Rotorstufe entspricht, und wobei der zweite Turbinenrotor (69B) axial zwischen dem ersten und dem dritten Rotor angeordnet ist, und umfassend eine Niederdruckturbinennabe (66), die an der erste Spule (30) montiert und an dem zweiten Turbinenrotor (69B) zum Stützen der mehreren Turbinenrotoren gesichert ist.

6. Gasturbinentriebwerk (20) nach einem der vorhergehenden Ansprüche, wobei es sich bei dem ersten und dem zweiten Lager (38D, 38E) um Rollenlager handelt.

7. Gasturbinentriebwerk (20) nach einem der vorhergehenden Ansprüche, wobei der erste und der zweite Winkel (92, 94) jeweils etwa 45° betragen.

8. Gasturbinentriebwerk (20) nach einem der vorhergehenden Ansprüche, ferner umfassend ein Gebläse (42), wobei es sich bei dem Gasturbinentriebwerk (20) um ein Luftfahrzeuggetriebetriebwerk mit hoher Nebenströmung handelt, das ein Nebenströmungsverhältnis von mehr als sechs aufweist.

9. Gasturbinentriebwerk (20) nach einem der Ansprüche 1 bis 7, ferner umfassend ein Gebläse (42), wobei das Gasturbinentriebwerk (20) ein unteres Gebläsedruckverhältnis von weniger als 1,45 beinhaltet.

10. Gasturbinentriebwerk (20) nach einem der vorhergehenden Ansprüche, wobei die Niederdruckturbine (46) ein Druckverhältnis von mehr als fünf aufweist.

## Revendications

1. Moteur à turbine à gaz (20) comprenant :
une chambre de combustion (56) ;
des turbines haute et basse pression (54, 46) en aval de la chambre de combustion (56) ;
des première et deuxième bobines (30, 32) coaxiales l'une à l'autre autour d'un axe longitudinal central (A) du moteur, la première bobine (30) étant disposée à l'intérieur de la seconde bobine (32) et s'étendant entre les extrémités avant et arrière, l'extrémité arrière s'étendant axialement au-delà de la seconde bobine (32) et supportant la turbine basse pression (46), dans lequel la turbine haute pression (54) est montée sur la seconde bobine (32), et la turbine basse pression (46) est montée sur la première bobine ;
une partie de boîtier (58D) disposée en aval de la turbine basse pression (46) ; et
des premier et second paliers (38D, 38E) montés à l'extrémité arrière de la première bobine (30) et supportés par la partie de boîtier (58D), dans lequel la partie de boîtier (58D) est un carter d'échappement de turbine et comporte un moyeu de palier (74) fixés de manière amovible à une bride annulaire (76), les premier et second paliers (38D, 38E) sont montés sur le moyeu de palier (74), les premier et second paliers (38D, 38E) sont disposés dans un compartiment de palier (72) à l'arrière de la seconde bobine (32), la turbine basse pression (46) comporte plusieurs rotors de turbine (69A, 69B, 69C), le premier palier (38D) est disposé axialement en avant d'un côté arrière (98) d'un dernier étage de rotor (96) de la turbine basse pression (46), le moyeu de palier (74) comporte des première et seconde parois de moyeu (86, 88) supportant respectivement les premier et second paliers (38D, 38E), les première et seconde parois de moyeu (86, 88) sont inclinées radialement par rapport aux premier et second paliers (38D, 38E) à partir d'un sommet annulaire au niveau duquel les première et seconde parois de moyeu (86, 88) sont jointes près de la bride annulaire (76), et une partie de la première paroi de moyeu (86) est disposée radialement en-dessous de la turbine basse pression (46), **caractérisé en ce que** :
la première paroi de moyeu (86) est orientée selon un premier angle (92) compris entre 30° et 60° par rapport à une ligne parallèle à l'axe longitudinal (A) ;
la seconde paroi de moyeu (88) est orientée selon un deuxième angle (94) compris entre 30° et 60° par rapport à une ligne parallèle à l'axe longitudinal (A) ;
les première et seconde parois de moyeu (86, 88) sont inclinées l'une vers l'autre dans des directions opposées et fournissent une structure unitaire intégrée.

2. Moteur à turbine à gaz (20) selon la revendication 1, dans lequel les premier et second paliers (38D, 38E) sont espacés l'un de l'autre d'environ quatre à douze pouces (10-30 cm).

3. Moteur à turbine à gaz (20) selon la revendication 1 ou 2, dans lequel la bride annulaire (76) est orientée par rapport à la première paroi de moyeu (86) selon un troisième angle (95) compris entre 0° et 30°.

4. Moteur à turbine à gaz (20) selon la revendication 3, dans lequel le premier angle (92) est d'environ 45° et le troisième angle (95) est d'environ 0°.

5. Moteur à turbine à gaz (20) selon une quelconque revendication précédente, dans lequel les multiples rotors de turbine (69A, 69B, 69C) comportent des premier, deuxième et troisième rotors de turbine, le troisième rotor de turbine (69C) correspondant au dernier étage de rotor (96), le premier rotor de turbine (69A) correspondant à un étage de rotor le plus en avant, et le deuxième rotor de turbine (69B) étant disposé axialement entre les premier et troisième rotors, et comprenant un moyeu de turbine basse pression (66) monté sur la première bobine (30) et fixé au deuxième rotor de turbine (69B) pour supporter les multiples rotors de turbine.

6. Moteur à turbine à gaz (20) selon une quelconque revendication précédente, dans lequel les premier et second paliers (38D, 38E) sont des roulements à rouleaux.

7. Moteur à turbine à gaz (20) selon une quelconque revendication précédente, dans lequel les premier et deuxième angles (92, 94) sont chacun d'environ 45°.

8. Moteur à turbine à gaz (20) selon une quelconque revendication précédente, comprenant en outre un ventilateur (42), dans lequel le moteur à turbine à gaz (20) est un moteur d'aéronef à engrenage à dérivation élevé ayant un rapport de dérivation supérieur à six.

9. Moteur à turbine à gaz (20) selon l'une quelconque des revendications 1 à 7, comprenant en outre un ventilateur (42), dans lequel le moteur à turbine à gaz (20) comporte un faible rapport de pression de ventilateur inférieur à 1,45.

10. Moteur à turbine à gaz (20) selon une quelconque revendication précédente, dans lequel la turbine basse pression (46) a un rapport de pression qui est supérieur à cinq.
